# EUROPÄISCHE PATENTSCHRIFT

(11) **EP 4 424 147 B1**
(45) Veröffentlichungstag und Bekanntmachung des Hinweises auf die Patenterteilung: **26.11.2025**
(21) Anmeldenummer: 24160381.0
(22) Anmeldetag: 28.02.2024
(51) Int. Cl.: A01G 13/27

(54) **BEFESTIGUNGSVORRICHTUNG FÜR EINE BAUMSCHUTZVORRICHTUNG UND BAUMSCHUTZVORRICHTUNG**
FASTENING DEVICE FOR A TREE PROTECTION DEVICE AND TREE PROTECTION DEVICE
DISPOSITIF DE FIXATION POUR DISPOSITIF DE PROTECTION D'ARBRE ET DISPOSITIF DE PROTECTION D'ARBRE

(30) Priorität: 28.02.2023 DE 102023104868
(43) Veröffentlichungstag der Anmeldung: 04.09.2024
(73) Patentinhaber: Geigenberger Biber-Baumschutz UG (haftungsbeschränkt), 88161 Lindenberg im Allgäu (DE)
(72) Erfinder: Winkler, Anita, 88161 Lindenberg im Allgäu (DE)
(74) Vertreter: noventive Patentanwaltsgesellschaft mbH

(56) Entgegenhaltungen:
- CN-A- 110 924 259
- KR-A- 20090 019 193
- KR-A- 20180 095 256
- KR-B1- 100 778 074
- US-A- 329 926

## Beschreibung

Die vorliegende Erfindung betrifft eine Befestigungsvorrichtung für eine Baumschutzvorrichtung sowie eine Baumschutzvorrichtung mit solch einer Befestigungsvorrichtung.

In Wäldern, Parkanlagen und an den Ufern von Gewässern kommt es häufig zu Baumschäden durch frei lebende Tiere. Dazu zählt beispielsweise Rotwild, das Triebe von Bäumen oder auch ganze Jungpflanzen abfrisst. Jedoch auch bereits größer gewachsene Bäume in der Nähe von Gewässern werden häufig von Tieren, insbesondere von Bibern, angefressen und nicht selten sogar vollständig gefällt. Schon durch das Schädigen des Baumes kann es aus Sicherheitsgründen vor unkontrolliert umstürzenden Bäumen, zu erheblichen finanziellen Schäden kommen. Daneben kann eine flächendeckende Schädigung an einer Mehrzahl von Bäumen, wenn diese nicht eingegrenzt werden kann, einen nachhaltigen Einfluss auf das gesamte lokale Ökosystem haben, beispielsweise die Beeinflussung des Verlaufs von Flüssen oder Schäden im Rahmen von Wiederaufforstungsprojekten.

In den letzten Jahren hat dabei insbesondere die Biberpopulation wieder erheblich zugenommen, so dass Biberbiss nicht selten auch in Parks mitten in Stadtgebieten und nahe an landwirtschaftlichen Nutzflächen festzustellen ist.

Um die Schäden durch Wildtiere zu reduzieren, werden häufig Schutzzäune um die Bäume gelegt. Diese sollen es insbesondere Bibern erschweren oder idealerweise unmöglich machen, einen Baum vollständig zu fällen, oder soweit zu schädigen, dass dieser nicht mehr überlebensfähig ist. Die Zäune werden dazu häufig eng um den Baum gelegt. Diese müssen dann regelmäßig, mindestens ein- bis zweimal im Jahr, überprüft werden, um zu verhindern, dass durch die Umfangszunahme eines wachsenden Baumes der Zaun nicht in die Rinde des Baumes oder den Baum selbst einwächst und somit einen Teil seiner Schutzwirkung verliert oder der Baum geschädigt wird.

KR 100 778 074 B1 zeigt eine Abstützvorrichtung für Bäume, die eine Kompensation eines Dickenwachstums zulässt.

Es ist Aufgabe der vorliegenden Erfindung, dieses Problem zu lösen und eine Vorrichtung bereitzustellen, die ein Einwachsen des Schutzzaunes verhindert oder zumindest verzögert.

Diese Aufgabe wird gelöst durch eine Baumschutzvorrichtung gemäß Anspruch 1 sowie eine Befestigungsvorrichtung für eine Baumschutzvorrichtung gemäß der nebengeordneten Ansprüche. Vorteilhafte Weiterbildungen der Erfindung sind in den Unteransprüchen angegeben.

Gemäß der Erfindung wird eine längenvariable Befestigungsvorrichtung für eine Baumschutzvorrichtung bereitgestellt. Die längenvariable Befestigungsvorrichtung weist ein Befestigungselement zur Befestigung an einem Umfangselement, ein Kontraktionselement, sowie ein Kontaktabschnittselement zur Kontaktierung einer Oberfläche auf. Das Kontraktionselement erstreckt sich dabei zwischen dem Kontaktabschnittselement und dem Befestigungselement und ist in seiner Erstreckungsrichtung längs einer Kraftwirkungsrichtung von der Oberfläche zu dem Befestigungselement längenvariabel ausgebildet ist. Die Kraftwirkungsrichtung bezeichnet dabei die Richtung der Kraft, die zwischen der kontaktierten Oberfläche und dem Befestigungselement - durch die Befestigungsvorrichtung - wirkt.

Auf diese Weise kann ein Schutzelement, wie zum Beispiel ein Zaun, in einer durch das Befestigungselement vorgegebenen Entfernung von einem Objekt, wie beispielsweise einem Baum, angeordnet werden. Das Befestigungselement ist dazu mit einem Kontraktionselement ausgebildet, welches eine Längenkontraktion des Befestigungselements ermöglicht. So kann ein einmal befestigtes Befestigungselement zwischen einer Oberfläche, wie die eines Baumes, und dem Schutzelement, bei einer radialen Ausdehnung, wie beim Wachsen eines Baumes, zusammengedrückt werden. Der Baum kann so ungehindert wachsen, ohne dass die Schutzvorrichtung in den Baum einwächst oder seine Schutzwirkung verliert.

In einer Weiterbildung der Erfindung, weist das Befestigungselement als Kontraktionselement eine Feder, beispielsweise eine Spiralfeder, auf. Durch Verwendung einer Feder kann das Befestigungselement zusätzlich zu einer Kontraktion auch wieder eine Expansion erfahren, was zum Einen eine Wiederverwendung einer bereits verwendeten Befestigungsvorrichtung erlaubt und zum Anderen eine flexible Befestigung innerhalb gewisser Toleranzen gestattet. Insbesondere bei kleinen Bäumen, die durch äußere Einflüsse, wie beispielsweise starker Wind, in Bewegung geraten können, kann dies vorteilhaft sein. So kann eine sichere Befestigung verbessert werden.

In einer alternativen Ausführungsform ist das Befestigungselement mit einem monodirektionalen Kontraktionselement vorgesehen, wie beispielsweise einem Rastmechanismus, so dass das Befestigungselement zwar in einer Längsrichtung kontrahiert werden kann, jedoch nicht wieder von alleine expandiert. Dies kann es erlauben, wartungsarme, oder wartungsfreie Befestigungselemente bereitzustellen, die unabhängig von einer materialabhängigen Federkraft sind.

Weiterhin vorteilhaft weist das Kontaktabschnittselement der Befestigungsvorrichtung auf einer zur Kontaktierung mit einem Objekt vorgesehenen Seite eine flächige Auflage auf. Als flächige Auflage ist dabei ein Abschnitt zu verstehen, der ausreichend groß ist, eine Kraft auf eine größere Fläche zu verteilen, als die Wirkungsfläche der Befestigungsvorrichtung selbst. Die Wirkungsfläche der Befestigungsvorrichtung ist dabei im Wesentlichen die Fläche, die ein Kraftüberträger, beispielsweise ein zylinderartiger Stab, aufweist, um wirkverbunden mit dem Kontraktionselement angeordnet zu werden. Auf diese Weise kann eine Beschädigung der Oberfläche, insbesondere eines Baumes, verringert werden, da keine punktuellen Kräfte auf die Oberfläche einwirken. Das Kontaktabschnittselement bzw. die Kontaktfläche weist dabei vorteilhaft ein witterungsbeständiges und/oder ein nichtreaktives Material auf. Als nicht-reaktive Materialien werden dabei vorliegend solche Materialien angesehen, die keine chemischen oder biologischen Reaktionen mit der zu kontaktierenden Oberfläche eingehen. Dies können beispielsweise Plastik, Gummi, oder nicht-oxidierende Metalle sein.

Zwischen dem Kontaktabschnittselement und dem Befestigungselement ist ein Kraftüberträger zur Übertragung einer Schubkraft in der Erstreckungsrichtung der Befestigungsvorrichtung vorgesehen. Der Kraftüberträger kann beispielsweise ein zylinderförmiger Stift oder Stab sein, der entlang der Haupterstreckungsrichtung der Befestigungsvorrichtung angeordnet ist.

Des Weiteren betrifft die vorliegende Erfindung eine Baumschutzvorrichtung mit wenigstens einer längenvariablen Befestigungsvorrichtung und einem Umfangselement. Dabei ist das Befestigungselement der Befestigungsvorrichtung bei einer vorgesehenen Verwendung an dem Umfangselement befestigt und das Umfangselement ist so dimensioniert, dass es bei vorgesehener Benutzung zumindest einen Teil eines Baumes in Umfangsrichtung und mit einem vordefinierten Abstand in radialer Richtung umschließt. Die Befestigungsvorrichtung ist dabei von dem Umfangselement ausgehend in radialer Richtung nach innen, also in Richtung des von dem Umfangselement umschlossenen Raumes, ausgerichtet angeordnet.

In einer bevorzugten Nutzungsform der Erfindung dient die Baumschutzvorrichtung als Schutz vor Bibern und ist daher in unmittelbarer Bodennähe vorgesehen. Andere Einsatzgebiete der Erfindung können aber auch den Schutz andere Baumteile betreffen, beispielsweise den Schutz von Astkronen beispielsweise vor Spechten. Auch die Sicherung von Baumhöhlen, welche von Kleintieren bewohnt werden, vor größeren Tieren ist erfindungsgemäß ermöglicht.

Dabei ist festzustellen, dass die Baumschutzvorrichtung grundsätzlich lediglich ein erfindungsgemäßes Befestigungselement aufweisen muss, um den gewünschten Zweck erfüllen zu können. So kann beispielsweise auch ein Teil eines Umfangselements in direktem Kontakt mit der Oberfläche, insbesondere einem Baum, sein und auf einer beispielsweise gegenüberliegenden Seite kann eine oder können mehrere erfindungsgemäße Befestigungsvorrichtungen an dem Umfangselement einerseits und der Oberfläche des Baumes andererseits angeordnet sein. Ein radiales Wachstum des Baumes bewirkt dann eine Kontraktion des Befestigungselements sowie ein Verschieben der gesamten Baumschutzvorrichtung. Dabei müsste lediglich eine etwaige Verankerung der Baumschutzvorrichtung im Boden entsprechend flexibel ausgebildet sein, oder nicht zur Anwendung kommen.

In bevorzugten Ausführungsformen der Erfindung weist die Baumschutzvorrichtung eine Mehrzahl, vorzugsweise in Umfangsrichtung in einer vorbestimmten Höhe wenigstens drei oder mehr Befestigungselemente auf. Besonders vorteilhaft, und jeweils abhängig von der Größe des Baumes sowie der Art des verwendeten Umfangselements, weist die Baumschutzvorrichtung in einer vertikalen Richtung auf verschiedenen Höhen Befestigungselemente, insbesondere mindestens zwei vertikal zueinander versetzte Befestigungselemente, auf. In einer besonders bevorzugten Ausführungsform weist die Baumschutzvorrichtung an vier Umfangspunkten eines Baumes jeweils zwei vertikal versetzte Befestigungselemente auf, sodass in dieser Ausführungsform acht Befestigungselemente ausgebildet sind.

In wenigstens einer Weiterbildung der Erfindung weist das Umfangselement der Baumschutzvorrichtung ein Haltemittel auf, das zur Befestigung bzw. zur Verankerung im Boden geeignet ist. Bei dem Haltemittel kann es sich beispielsweise um einen Verankerungsstift handeln, der in Eingriff mit dem Umfangselement ist und im Boden versenkbar ausgebildet ist. Alternativ kann es sich bei dem Haltemittel auch um eine im Boden vertiefbare Strebe handeln, wobei das Umfangselement mit der Strebe gekoppelt ist.

Die Strebe kann dabei beispielsweise ein Holzpfosten oder ein Metallpfosten sein. Insbesondere kann die Strebe ein Holzpfahl mit angespitztem Ende sein, der in einem Boden versenkbar ist, oder ein Zaunpfahl der entweder im Boden versenkt oder mit einem Fundament im Boden befestigt ist.

Ein solches Haltemittel erlaubt den sicheren und stabilen Stand der Baumschutzvorrichtung. Dies kann dazu beitragen, dass die Baumschutzvorrichtung bodennah angeordnet bleibt und somit ein Unterqueren für größere Wildtiere erschwert ist.

Zudem dient ein solches Haltemittel als Gegenlager zu der von der Oberfläche eines Baumes ausgeübten Schubkraft auf die Befestigungsvorrichtung. Durch Verwendung eines Haltemittels kann die auf das Befestigungsmittel wirkende Kraft in den Boden abgeleitet werden, bzw. sich im Boden abstützen. Ohne ein Haltemittel würde die Kraft durch die Kopplung der Befestigungsvorrichtung mit dem Umfangselement in dieses geleitet werden und daraus resultierend eine entsprechende Zugkraft in Umfangsrichtung des Umfangselements erzeugen, die sonst zu einer Verformung des Umfangselements führen würde.

Das Umfangselement der Baumschutzvorrichtung ist vorteilhafterweise als ein Zaun, insbesondere ein Maschendrahtzaun, ausgebildet. Dazu weist die Befestigungsvorrichtung ein Befestigungselement auf, das zur Befestigung an einem derartigen Zaun ausgebildet ist. Das Befestigungselement kann dazu beispielsweise zwei flächige Platten aufweisen, die auf verschiedenen Seiten des Umfangselements angeordnet werden und mittels eines oder mehrerer Befestigungselemente fest miteinander verbunden werden, und dabei Teile des Umfangselements einklemmen und dadurch damit gekoppelt werden.

Das Umfangselement weist vorteilhaft ein bissfestes Material auf, beispielsweise ein Drahtgewebe, insbesondere Maschendraht, oder Drahtgitter. Vorzugsweise weist der Draht mindestens 1mm, weiter bevorzugt mindestens 2mm, insbesondere mindestens 3mm auf. Die Maschenweite ist vorzugsweise höchstens 10x10cm, weiter bevorzugt höchstens 7x7cm, insbesondere 4x4cm. Die Höhe des Drahtgewebes beträgt vorteilhaft wenigstens 80cm, vorzugsweise wenigstens 100cm, insbesondere wenigstens 120cm.

In mindestens einer Ausführungsform der Erfindung weist das Umfangselement des Weiteren ein Stützelement auf, das in Umfangsrichtung ganz oder zumindest teilweise um die zu kontaktierende Oberfläche verläuft. Dabei kann es sich beispielsweise um einen Stützring handeln, der dem Umfangselement eine vorgesehene Form, beispielsweise eine runde Form, verleiht. So kann das Umfangselement materialsparend um die Oberfläche angeordnet werden.

Für eine Verwendung der erfindungsgemäßen Baumschutzvorrichtung kann das Umfangselement, insbesondere der Umfangszaun, zudem ein Verschlussmittel aufweisen, welches eine Verbindung zwischen einem ersten Ende und einem zweiten Ende des Umfangselement ermöglicht. Dies erlaubt es, beispielsweise einen herkömmlichen Zaun als Umfangselement zu verwenden. Der ist dabei an einer ersten Stelle mit seinem offenen Ende in dem gewünschten radialen Abstand von der Oberfläche angeordnet und weiter in einem vorgegebenen bzw. gewünschten radialen Abstand zur Oberfläche um die Oberfläche angeordnet, so dass die Zaunenden die gewünschte Oberfläche, umfassen. Der Verschluss ist ausgebildet, die beiden Enden des Zaunes zu verbinden. Der Verschluss kann auch ausgebildet sein, einander überlappende freie Enden des Zaunes miteinander zu verbinden.

In weiteren vorteilhaften Ausbildungsformen der vorliegenden Erfindung ist der Kraftüberträger einstückig mit dem Kontaktabschnittselement ausgebildet. Es ist zudem denkbar, dass der Kraftüberträger auf Seiten des Kontaktabschnittselements für diejenigen Ausführungsformen, in denen das Kontraktionselement nicht unmittelbar in dem Kontaktabschnittselement aufgenommen ist, ein Gewinde aufweist, das mit einem in dem Kontaktabschnittselement ausgebildeten Gegengewinde in Eingriff bringbar ist, um das Kontaktabschnittselement mit der übrigen Befestigungsvorrichtung zu verbinden.

Dabei ist es insbesondere denkbar, dass während der Dauer einer Verwendung der Baumschutzvorrichtung, die mehrere Jahre betragen kann, der bzw. die Kraftüberträger der Befestigungsvorrichtung und/oder der Aufnahmeabschnitt und/oder das Kontraktionselement ausgetauscht werden, um beschädigte oder verwitterte Teile auszuwechseln. Auf diese Weise kann ermöglicht werden, eine etwaig verlorene Funktion einer Befestigungsvorrichtung durch Ersatz eines oder mehrere Bauteile wiederherzustellen. Dabei kann ein einmal platziertes Umfangselement um die Oberfläche, bzw. den Baum, angeordnet bleiben.

Ein derartiger Komponentenersatz kann auch realisiert werden in Fällen, in denen durch Wachstum eines Baumes der Abstand zwischen Umfangselement und Oberfläche des Baumes für die Länge der ursprünglich verwendeten Befestigungsvorrichtung zu gering geworden ist. Dies könnte ein Einwachsen des Kontaktabschnittselements in den Baum zur Folge haben und den Baum folglich schädigen. Durch Einsatz eines kürzeren Kraftüberträgers, eines kürzeren Kontraktionselements oder eines kürzeren Aufnahmeabschnitts, bzw. einer längenangepassten Kombination dieser Komponenten, kann diesem Problem begegnet werden. Wenigstens eine der Längen-bestimmenden Komponenten der Befestigungsvorrichtung ist daher vorteilhafterweise modular bzw. auswechselbar ausgestaltet. Insbesondere können auch alle der Längen-bestimmenden Komponenten modular bzw. auswechselbar sind.

Wie bereits beschrieben, kann eine Auswechslung beispielsweise durch ineinander lösbar verschraubte Komponenten ermöglicht sein. In einer bevorzugten Ausführungsform ist dabei der Kraftüberträger ein zylindrischer Stab, der an wenigstens einem seiner longitudinalen Enden mittelbar oder unmittelbar mit einem Kontraktionselement, vorzugsweise einer Spiralfeder, in Wirkverbindung ist. Das Kontraktionselement kann dabei auch unmittelbar an dem Kraftüberträger befestigt sein.

Das Kontraktionselement, spezifisch die verwendete Feder, ist vorzugsweise in einer Aufnahmeöffnung oder einer anderen Komponente der Befestigungsvorrichtungen angeordnet. Auf diese Weise kann ein Schutz des Kontraktionselement vor Witterungseinflüssen und Beschädigung verbessert werden. Der Kraftüberträger ist dabei derart ausgebildet, dass er in dieselbe Aufnahme ragen kann, in der auch das Kontraktionselement angeordnet ist, also einen Querschnitt aufweist, der mit einem Querschnitt des Aufnahmeabschnitts, in dem das Kontraktionselement vorgesehen ist, kompatibel ist.

In wenigstens einer Ausführungsform der vorliegenden Erfindung, in der das Kontraktionselement unmittelbar in dem Kontaktabschnittselement vorgesehen ist, bildet die Öffnung in dem Kontaktabschnittselement in der das Kontraktionselement angeordnet ist, gleichzeitig auch den Aufnahmeabschnitt für den Kraftüberträger.

### FIGURENBESCHREIBUNG

Zu besseren Erläuterung der Erfindung werden im Folgenden bevorzugte Ausführungsbeispiele der Erfindung anhand von Zeichnungen erläutert. Es können dabei die verschiedenen Ausführungsbeispiele als auch die Ausführungsformen der vorhergehenden Beschreibung frei miteinander kombiniert werden, um die erfindungsgemäße Lösung in unterschiedlichster Weise zu präzisieren.

Es zeigt in schematischer Darstellung die
- Figur 1: eine Querschnittansicht von oben auf eine erfindungsgemäße Baumschutzvorrichtung;
- Figur 2: eine Seitenansicht einer Baumschutzvorrichtung gemäß einer Ausführungsform der Erfindung;
- Figur 3: eine Befestigungsvorrichtung gemäß einer Ausführungsform in Seitenansicht;
- Figur 4: eine Befestigungsvorrichtung gemäß einer weiteren Ausführungsform in Seitenansicht;
- Figur 5: eine Befestigungsvorrichtung gemäß einer weiteren Ausführungsform in Seitenansicht.

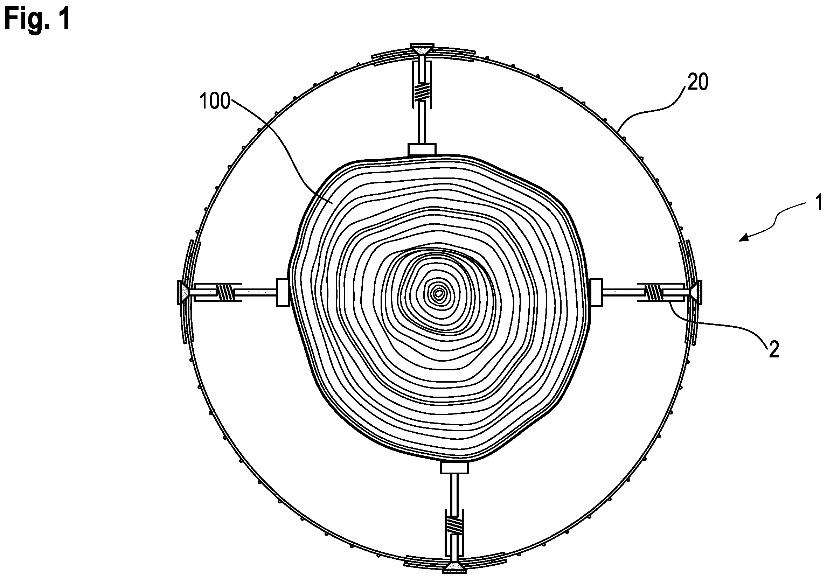

Figur 1 zeigt eine Querschnittansicht von oben auf eine erfindungsgemäße Baumschutzvorrichtung 1 gemäß einer bevorzugten Ausführungsform der Erfindung. Die Baumschutzvorrichtung 1 ist um einen Baum 100 herum angeordnet und weist ein Umfangselement 20 sowie in einer Umfangsrichtung vier Befestigungsvorrichtungen 2 auf. Das Umfangselement 20 weist dabei einen durch die Befestigungsvorrichtungen 2 definierten radialen Abstand um den Baum 100 auf. Die Befestigungsvorrichtungen 2 sind an einem Ende an dem Umfangselement 20 befestigt. An einem zweiten Ende sind die Befestigungsvorrichtungen 2 in Kontakt mit der Oberfläche des Baumes 100. Die Befestigungsvorrichtungen 2 sind dabei in einer Längenrichtung variabel, sodass bei einem Wachstum des Baums 100 in radialer Richtung durch Druck der Baumoberfläche auf die Befestigungsvorrichtungen 2 diese zusammengedrückt werden, wodurch der radiale Abstand zwischen Baumoberfläche und Umfangselement 20 geringer wird, und das Umfangselement 20 unverändert bleiben kann. Es ist zu bemerken, dass in Figur 1 kein Haltemittel zum Abstützen bzw. Gegenlagern der von der Baumoberfläche ausgeübten Druckkraft dargestellt ist. Abhängig von der gewählten Ausführungsform der Erfindung kann ein Haltemittel bei der vorgesehen Benutzung vorgesehen sein, oder nicht.

Für die Figuren werden für gleiche Elemente gleiche Bezugszeichen verwendet und deren Beschreibung wird nicht wiederholt. Vielmehr werden bei abweichenden Ausführungsformen insbesondere die sich unterscheidenden Merkmale herausgestellt.

Dabei sind Ausführungsformen sowie Kombinationen verschiedener Ausführungsformen möglich, selbst wenn diese nicht explizit in den Figuren dargestellt sind.

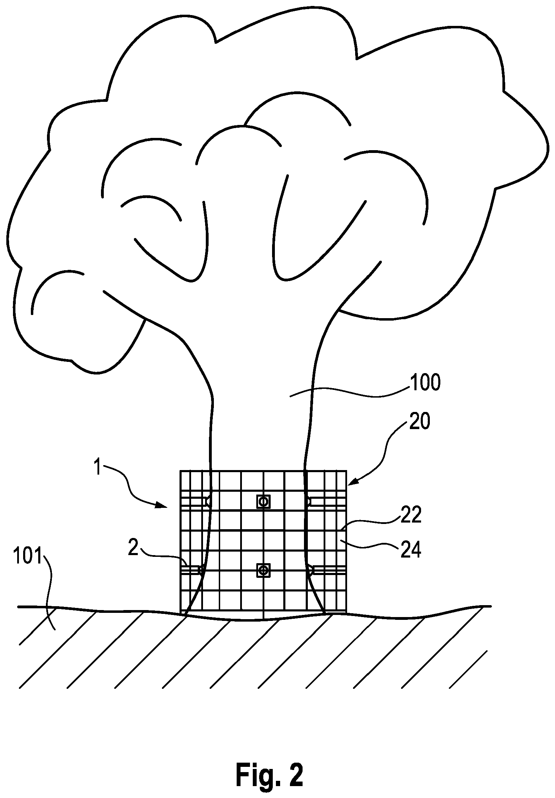

Figur 2 zeigt eine Seitenansicht der Baumschutzvorrichtung 1 gemäß Figur 1. Die Baumschutzvorrichtung 1 ist dabei um den Stamm des Baumes 100. auf einem Boden 101 aufliegend bzw. in Bodennähe angeordnet. Das Umfangselement 20 ist dabei ein Maschendrahtzaun aufweisend ein Drahtgeflecht 22 sowie Maschen 24. In einer vertikalen Richtung, also vom Boden 101 aufwärts gerichtet, sind dabei jeweils zwei Befestigungsvorrichtungen 2 ausgebildet. In Umfangsrichtung sind auf Höhe dieser beiden Befestigungsvorrichtungen 2 jeweils vier Befestigungsvorrichtungen 2 angeordnet, wobei je eine der Befestigungsvorrichtungen 2 von dem Baum 100 verdeckt ist, da diese sich in der dargestellten Verwendungsform hinter dem Baum befindet. Es versteht sich, dass, insbesondere in Abhängigkeit von der Größe des Baumes, auch weitere oder weniger Befestigungsvorrichtungen 2 in einer Umfangsrichtung um den Baum 100 vorgesehen sein können.

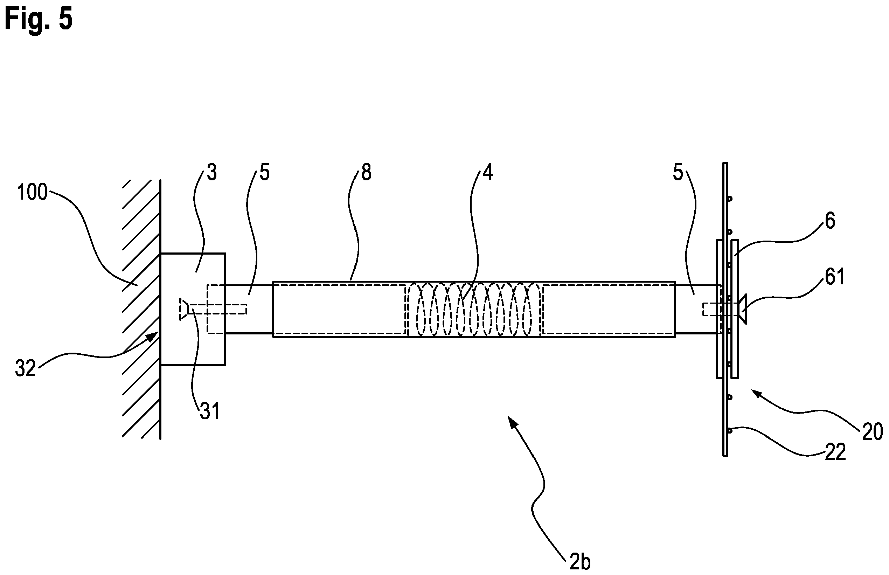

Es ist zu bemerken, dass in der Figur 2 die Befestigungsvorrichtung 2 gemäß der speziellen Ausführung nach Fig. 5 als Befestigungsvorrichtung 2b dargestellt. Es versteht sich, dass dies nur exemplarisch ist und beliebige Befestigungsvorrichtungen und auch verschiedene Befestigungsvorrichtungen für die erfindungsgemäße Realisierung verwendbar sind.

Die Baumschutzvorrichtung 1 kann insbesondere auch derart ausgebildet sein, dass diese über etwaiges Wurzelwerk in unmittelbarer Nähe des Baumstammes ragt, um auch die Wurzeln des Baumes 100 vor Wildbiss, insbesondere Biberbiss, zu schützen.

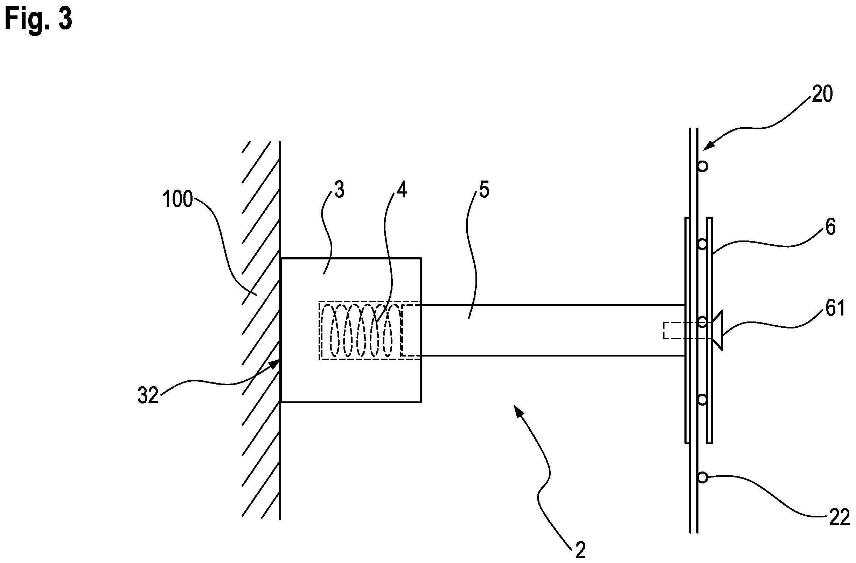

Figur 3 zeigt eine Befestigungsvorrichtung 2 gemäß einer Ausführungsform der vorliegenden Erfindung in Seitenansicht. Die Befestigungsvorrichtung 2 weist an einem Ende ein Kontaktabschnittselement 3 auf. Das Kontaktabschnittselement 3 ist dazu vorgesehen, wie in Figur 3 gezeigt, mit einer an einem Ende liegenden Kontaktfläche 32 eine Oberfläche, insbesondere einen Baum 100, zu kontaktieren. An dem anderen Ende der Befestigungsvorrichtung 2, ist ein Befestigungselement 6 vorgesehen. Das gezeigte Befestigungselement 6 ist mit zwei flächigen Platten ausgebildet, die das Drahtgeflecht 22 eines Umfangselement 20 von gegenüberliegenden Seiten kontaktieren und mittels eines Befestigungsmittels 61, beispielsweise einer Schraube, eingeklemmt lagern.

In der in Figur 3 gezeigten Ausführungsform dient die Befestigungsschraube 61 zudem dazu, einen Kraftüberträger 5 mit dem Befestigungselement 6 zu koppeln, sodass eine auf den Kraftüberträger ausgeübte Schubkraft über das Befestigungselemente 6 an das Umfangselement 20 und gegebenenfalls eine Stütze bzw. ein Haltemittel des Umfangselements 20 oder eine Verankerung ableitbar ist.

Der Kraftüberträger 5 kann beispielsweise als ein Zylinder, insbesondere ein Metallzylinder, ausgebildet sein. An dem der Befestigung gegenüberliegenden Seite des Kraftüberträgers 5 ist dieser mittelbar über ein Kontraktionselement 4 mit dem Kontaktabschnittselement 3 gekoppelt. Das Kontraktionselement 4 ist in einer bevorzugten Ausführungsform als Spiralfeder ausgebildet.

Zur Befestigung des Umfangselements 20 an der Oberfläche, beziehungsweise dem Baum 100, wird der Abstand zwischen Umfangselement 20 und Baum 100 vorzugsweise initial derart gewählt, dass die Befestigungsvorrichtungen 2 sich in einem zumindest leicht vorgespannten Zustand des Kontraktionselement 4 befinden. Auf diese Weise wird das Umfangselement 20 aufgrund der durch das Kontraktionselement 4 verursachten Rückstellkraft auf den Kraftüberträger 5 in radialer Richtung nach außen weg von der Oberfläche des Baumes 100 gedrängt und kann so stabil an der Oberfläche gehalten werden. Wenn alle gewünschten Befestigungsvorrichtungen 2 rund um den Baum 100 vorgesehen und entsprechend vorgespannt angeordnet sind, kann die Baumschutzvorrichtung 1 sicher und stabil an dem Baum gehalten werden.

So wird bei Einsatz der erfindungsgemäßem Baumschutzvorrichtung 1 beim Wachsen des Baumes 100, also insbesondere einem Umfangszuwachs des Baumstammes, eine Kraft von der Oberfläche des Baumstammes auf die Kontaktfläche 32 und damit auf das Kontaktabschnittselement 3 ausgeübt. Die Kraft wird dann abgeleitet in das Kontraktionselement 4, das in einer Öffnung des Kontaktabschnittselements 3 angeordnet ist, und von dort wiederum auf den Kraftüberträger 5, der seinerseits mit dem Befestigungselement 6 gekoppelt ist und die Kraft dorthin ableitet.

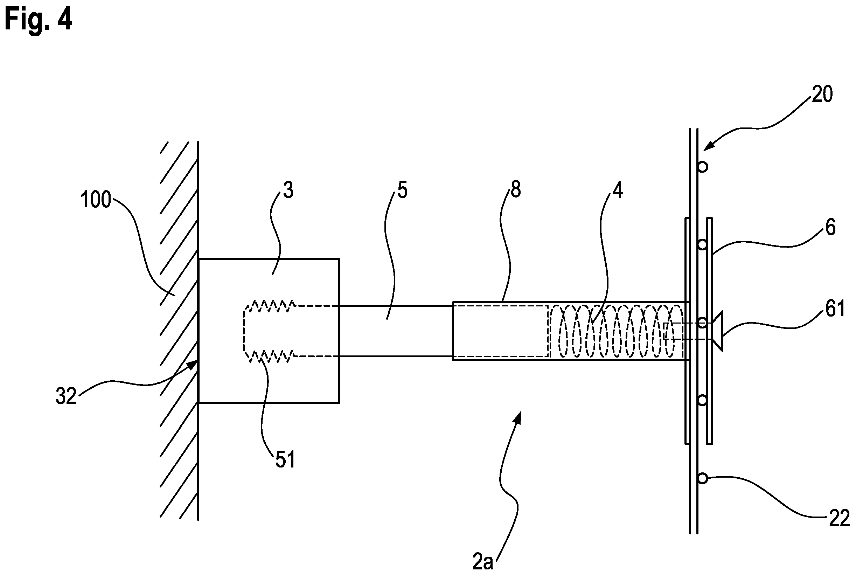

Figur 4 zeigt eine alternative Ausführungsform der Befestigungsvorrichtung 2 gemäß der Erfindung, die zur Unterscheidung als Befestigungsvorrichtung 2a gekennzeichnet ist. Im Unterschied zu der Befestigungsvorrichtung 2 in Figur 3 ist das Kontraktionselement 4 der Befestigungsvorrichtung 2a in einem Aufnahmeabschnitt 8 angeordnet. Der Aufnahmeabschnitt 8 ist dabei rohrartig ausgebildet. Das Kontraktionselement 4, das bevorzugt wiederum als Spiralfeder ausgebildet ist, ist in dieser Ausführungsform an einer dem Befestigungselement 6 zugewandten Seite der Befestigungsvorrichtung 2a angeordnet. Von dem Kontraktionselement 4 ausgehend in Erstreckungsrichtung der Befestigungsvorrichtung 2a erstreckt sich der Kraftüberträger 5. Dabei ist der Kraftüberträger 5 auf seiner dem Kontraktionselement 4 zugewandten Seite mit dem Kontraktionselement 4 in Wirkverbindung und an seiner anderen Seite in dem Kontaktabschnittselement 3 aufgenommen. Dazu erstreckt sich der Kraftüberträger in den Aufnahmeabschnitt 8, in dem das Kontraktionselement 4 angeordnet ist.

Der Kraftüberträger 5 bildet somit gemeinsam mit dem Aufnahmeabschnitt 8 in der hier gezeigten Ausführungsform ein zweiteiliges Rohr, das einerseits mit dem Befestigungselement 6 und andererseits mit dem Kontaktabschnittselement 3 verbunden ist. Die Verbindung dieses Rohres mit dem Befestigungselemente 6 kann über die Schraube 61 erfolgen, wie in Figur 4 gezeigt. In alternativen Ausführungsformen kann die Verbindung des Rohres zudem durch andere Verbindungsarten an einer Platte des Befestigungselements 6 erfolgen, beispielsweise durch separate Schrauben, Schweißen, oder ähnliche dem Fachmann geläufige Verbindungsarten.

In der in Figur 4 gezeigten Ausführungsform wird eine Kraft somit von der Oberfläche, also dem wachsenden Baum 100, auf die Kontaktfläche 32 des Kontaktabschnittselements übertragen, von dem Kontaktabschnittselement 3 auf den Kraftüberträger 5, der wiederum die Kraft in dem Aufnahmeabschnitt auf das Kontraktionselement 4 überträgt. Bei wachsendem Druck auf das Kontaktabschnittselement 3 wird der Kraftüberträger also tiefer in den Aufnahmeabschnitt 8 gedrängt, wodurch das Kontraktionselement kontrahiert und die Distanz zwischen dem Umfangselement 20 und der Oberfläche somit reduziert wird. Der Kraftüberträger 5 ist dabei direkt mit dem Kontaktabschnittselement 3 verbunden, hier mittels einer Schraubverbindung über ein Gewinde 51.

Das Gewinde 51 ist dabei direkt am Ende des Kraftüberträgers 5 vorgesehen und ein entsprechendes Gegengewinde ist in der Öffnung des Kontaktabschnittselements 3 ausgebildet. In anderen Ausführungsformen kann es andere Verbindungsarten oder auch eine einstückige Ausbildung des Kraftüberträgers mit dem Kontaktabschnittselement 3 geben.

In Figur 5 ist eine weitere alternative Ausführungsform der Befestigungsvorrichtung 2 gemäß der vorliegenden Erfindung gezeigt. Die hier gezeigte alternative Befestigungsvorrichtung 2b weist im Gegensatz zu der Ausführungsform gemäß Figur 4 ein dreiteiliges Rohr auf. Das dreiteilige Rohr weist dabei einen Aufnahmeabschnitt 8 und ein in dem Aufnahmeabschnitt 8 angeordnetes Kontraktionselement 4 auf. Das Kontraktionselement 4 ist wiederum vorteilhaft als Spiralfeder ausgebildet. Auf einer dem Kontaktabschnittselement 3 zugewandten Seite des Aufnahmeabschnitts 8 erstreckt sich dabei ein erster Kraftüberträger 5 von dem Kontaktabschnittselement 3 in den Aufnahmeabschnitt 8. Auf einer dem Befestigungselement 6 zugewandten Seite des Aufnahmeabschnitts 8 erstreckt sich ein weiterer Kraftüberträger 5 aus dem Aufnahmeabschnitt 8 zu dem Befestigungselement 6.

Wie in Figur 5 zu erkennen ist, kann der Kraftüberträger 5 auf einer dem Kontaktabschnittselement 3 zugewandten Seite auch mittels einer Schraube 31 mit dem Kontaktabschnittselement 3 gekoppelt sein. In wenigstens einer Ausführungsform kann der Kraftüberträger 5 integral mit dem Kontaktabschnittselement 3 ausgebildet sein. Für die in den Figuren gezeigten Ausführungsformen gilt dabei entsprechend, dass es eine reversible aber auch eine nicht reversible Kopplung zwischen den Komponenten geben kann, oder eine andere Art der Befestigung.

In der in Figur 5 gezeigten Ausführungsform ist das Kontraktionselement 4 somit zwischen den Kraftüberträgern 5 auf Seiten des Kontaktabschnittselements 3 und auf Seiten des Befestigungselements 6 angeordnet. Wird eine Schubkraft auf das Kontaktabschnittselement 3 in Richtung des Kontraktionselement 4 ausgeübt, so kann eine Kontraktion des Kontraktionselement 4 erfolgen, in dem sich die Kraftüberträger 5 in den Aufnahmeabschnitt 8 versenken. Auf diese Weise ist wiederum ermöglicht, dass in der vorgesehenen Benutzung zur Kontaktierung einer Oberfläche eines Baumes100 bei dessen Wachstum der Abstand zwischen der Baumoberfläche und dem Umfangselement 20 reduziert wird.

Zusammengefasst betrifft die Erfindung somit eine Baumschutzvorrichtung 1 mit wenigstens einer längenvariablen Befestigungsvorrichtung 2 und einem Umfangselement 20. Die Befestigungsvorrichtung 2 ist ausgebildet, abhängig von einer einwirkenden Kraft gestaucht zu werden, und so abhängig von einer Größenänderung oder Verlagerung einer kontaktierten Oberfläche, insbesondere abhängig von dem Wachstum eines Baumes, seine Länge zu verkürzen. Das Umfangselement, das so dimensioniert ist, dass es bei NC-2024-0674 vorgesehener Benutzung zumindest einen Teil eines Baumes 100 in Umfangsrichtung in einem vordefinierten radialen Abstand umschließt, bleibt dabei im Wesentlichen ortsfest und das Umfangselement 20 ist in einer dynamisch-stabilen Verbindung mit der Oberfläche.

## Patentansprüche

1. Längenvariable Befestigungsvorrichtung (2) für eine Baumschutzvorrichtung (1) aufweisend ein Befestigungselement (6) zur Befestigung an einem Umfangselement (20), ein Kontraktionselement (4), sowie einen Kontaktabschnittselement (3) zur Kontaktierung einer Oberfläche, wobei sich das Kontraktionselement (4) zwischen dem Kontaktabschnittselement (3) und dem Befestigungselement (6) erstreckt, wobei das Befestigungselement (6) in seiner Erstreckungsrichtung längs einer Kraftwirkungsrichtung von der Oberfläche zu dem Befestigungselement längenvariabel ausgebildet ist und zwischen dem Kontaktabschnittselement (3) und dem Befestigungselement (6) ein Kraftüberträger zur Übertragung einer Schubkraft in Erstreckungsrichtung der Befestigungsvorrichtung (2) ausgebildet ist.

2. Längenvariable Befestigungsvorrichtung (2) gemäß Anspruch 1, wobei das Kontraktionselement (4) eine Feder aufweist.

3. Baumschutzvorrichtung (1) mit wenigstens einer längenvariablen Befestigungsvorrichtung (2) gemäß einem der vorhergehenden Ansprüche und einem Umfangselement (20), wobei das Befestigungselement (6) der Befestigungsvorrichtung (2) an dem Umfangselement (20) befestigt ist und wobei das Umfangselement (20) so dimensioniert ist, dass es bei vorgesehener Benutzung zumindest einen Teil eines Baumes (100) in Umfangsrichtung in einem vordefinierten radialen Abstand umschließt, und des Weiteren die wenigstens eine Befestigungsvorrichtung (2) von dem Umfangselement (20) radial in Richtung des umschlossenen Raumes ausgerichtet angeordnet ist.

4. Baumschutzvorrichtung (1) gemäß Anspruch 3, wobei die Baumschutzvorrichtung (1) eine Mehrzahl von Befestigungsvorrichtungen (2) aufweist.

5. Baumschutzvorrichtung (1) gemäß einem der Ansprüche 3 oder 4, wobei das Umfangselement (20) ein Haltemittel aufweist, das zur Befestigung bzw. zur Verankerung im Boden geeignet ist.

6. Baumschutzvorrichtung (1) gemäß Anspruch 5, wobei das Haltemittel als eine in den Boden vertiefbare Strebe, insbesondere als Metallpfosten, als Holzpfosten oder als Holzpfahl, ausgebildet ist und das Umfangselement (20) mit dem Haltemittel gekoppelt ist.

7. Baumschutzvorrichtung (1) gemäß einem der Ansprüche 5 oder 6, wobei das Haltemittel als Verankerungsstift ausgebildet ist.

8. Baumschutzvorrichtung (1) gemäß einem der Ansprüche 3 bis 7, wobei das Umfangselement (20) ein Maschendrahtzaun ist.

9. Baumschutzvorrichtung (1) gemäß einem der Ansprüche 3 bis 8, wobei wenigstens eine der Komponenten aus Kontraktionselement (4), Kontaktabschnittselement (3) und/oder ein Kraftüberträger (5) zur Übertragung einer Kraft zwischen der Oberfläche und dem Befestigungselement, reversibel lösbar in der Befestigungsvorrichtung (2) vorgesehen ist.

## Claims

1. Length-variable fastening device (2) for a tree protection device (1), comprising a fastening element (6) for fastening to a peripheral element (20), a contraction element (4), and a contact portion element (3) for contacting a surface, wherein the contraction element (4) extends between the contact portion element (3) and the fastening element (6), wherein the fastening element (6) is designed to be length-variable in its direction of extension along a direction of force action from the surface to the fastening element, and a force transmitter for transmitting a thrust force in the direction of extension of the fastening device (2) is designed between the contact portion element (3) and the fastening element (6).

2. Length-variable fastening device (2) according to claim 1, wherein the contraction element (4) comprises a spring.

3. Tree protection device (1) comprising at least one length-variable fastening device (2) according to either of the preceding claims and a peripheral element (20), wherein the fastening element (6) of the fastening device (2) is fastened to the peripheral element (20) and wherein the peripheral element (20) is dimensioned such that, when used as intended, it encloses at least part of a tree (100) in the circumferential direction at a predefined radial distance, and furthermore the at least one fastening device (2) is arranged aligned radially from the peripheral element (20) in the direction of the enclosed space.

4. Tree protection device (1) according to claim 3, wherein the tree protection device (1) comprises a plurality of fastening devices (2).

5. Tree protection device (1) according to one of claims 3 or 4, wherein the peripheral element (20) comprises a holding means suitable for fastening or anchoring in the ground.

6. Tree protection device (1) according to claim 5, wherein the holding means is designed as a strut which can be sunk into the ground, in particular as a metal post, as a wooden post or as a wooden pile, and the peripheral element (20) is coupled to the holding means.

7. Tree protection device (1) according to one of claims 5 or 6, wherein the holding means is designed as an anchoring pin.

8. Tree protection device (1) according to any of claims 3 to 7, wherein the peripheral element (20) is a wire-mesh fence.

9. Tree protection device (1) according to any of claims 3 to 8, wherein at least one of the components of contraction element (4), contact portion element (3) and/or a force transmitter (5) for transmitting a force between the surface and the fastening element is provided in the fastening device (2) in a reversibly detachable manner.

## Revendications

1. Dispositif de fixation à longueur variable (2) pour un dispositif de protection d'arbre (1), présentant un élément de fixation (6) pour la fixation à un élément périphérique (20), un élément de contraction (4), ainsi qu'un élément formant section de contact (3) destiné à entrer en contact avec une surface, dans lequel l'élément de contraction (4) s'étend entre l'élément formant section de contact (3) et l'élément de fixation (6), dans lequel l'élément de fixation (6) est réalisé de manière à être variable en longueur dans sa direction d'extension le long d'une direction d'action de force de la surface jusqu'à l'élément de fixation et un élément transmetteur de force permettant de transmettre une force de poussée dans la direction d'extension du dispositif de fixation (2) est réalisé entre l'élément formant section de contact (3) et l'élément de fixation (6).

2. Dispositif de fixation à longueur variable (2) selon la revendication 1, dans lequel l'élément de contraction (4) présente un ressort.

3. Dispositif de protection d'arbre (1) comportant au moins un dispositif de fixation à longueur variable (2) selon l'une des revendications précédentes et un élément périphérique (20), dans lequel l'élément de fixation (6) du dispositif de fixation (2) est fixé à l'élément périphérique (20) et dans lequel l'élément périphérique (20) est dimensionné de sorte que, lors de l'utilisation prévue, **il** entoure au moins une partie d'un arbre (100) dans la direction périphérique à une certaine distance radiale prédéfinie, et en outre, l'au moins un dispositif de fixation (2) est disposé de manière à être aligné radialement par rapport à l'élément périphérique (20) dans la direction de l'espace entouré.

4. Dispositif de protection d'arbre (1) selon la revendication 3, dans lequel le dispositif de protection d'arbre (1) présente une pluralité de dispositifs de fixation (2).

5. Dispositif de protection d'arbre (1) selon l'une des revendications 3 ou 4, dans lequel l'élément périphérique (20) présente un moyen de maintien adapté pour la fixation ou l'ancrage dans le sol.

6. Dispositif de protection d'arbre (1) selon la revendication 5, dans lequel le moyen de maintien est réalisé sous la forme d'une entretoise pouvant être enfoncée dans le sol, en particulier sous la forme d'un poteau métallique, d'un poteau en bois ou d'un pieu en bois, et l'élément périphérique (20) est accouplé au moyen de maintien.

7. Dispositif de protection d'arbre (1) selon l'une des revendications 5 ou 6, dans lequel le moyen de maintien est réalisé sous la forme d'une cheville d'ancrage.

8. Dispositif de protection d'arbre (1) selon l'une des revendications 3 à 7, dans lequel l'élément périphérique (20) est une clôture grillagée.

9. Dispositif de protection d'arbre (1) selon l'une des revendications 3 à 8, dans lequel au moins l'un des composants parmi l'élément de contraction (4), l'élément formant section de contact (3) et/ou un élément transmetteur de force (5) permettant de transmettre une force entre la surface et l'élément de fixation est prévu de manière à être amovible de façon réversible dans le dispositif de fixation (2).
